# EUROPEAN PATENT SPECIFICATION

(11) **EP 1 809 057 B1**
(45) Date of publication and mention of the grant of the patent: **17.06.2009**
(21) Application number: 06250169.7
(22) Date of filing: 13.01.2006
(51) Int. Cl.: H04W 88/02, H04L 12/56, G08B 13/14

(54) **Plural wirelessly connected devices with user alarm if the wireless connection is lost or endangered**
Mehrere drahtlos verbundene Geräte mit einem Benutzeralarm falls die drahtlose Verbindung abbricht oder gefährdet ist
Plusieurs dispositifs à connection sans fil avec une alarme utilisateur si la connexion sans fil est perdue ou menacée

(43) Date of publication of application: 18.07.2007
(73) Proprietor: Research In Motion Limited, Waterloo, Ontario N2L 3W8 (CA)
(72) Inventor: Brown, Michael, Kitchener, Ontario N2M 2Z2 (CA); Adams, Neil, Waterloo, Ontario N2K 4EA (CA); Little, Herbert, Waterloo, Ontario N2T 2V8 (CA); Totzke, Scott, Waterloo, Ontario N2K 3Y5 (CA)
(74) Representative: Fennell, Gareth Charles

(56) References cited:
- EP-A- 1 164 555
- EP-A- 1 534 030
- DE-A1- 19 941 580
- GB-A- 2 394 585
- US-B1- 6 614 350

## Description

### BACKGROUND

### 1. Technical Field

This specification generally relates to plural wirelessly connected devices, at least one of such devices being portable -- and possibly both or all such devices being portable.

### 2. Description of Related Art

It is now becoming commonplace for portable electronic devices to be wirelessly connected with other (portable or non-portable) electronic devices. For example, using Bluetooth (RTM) technology, short range RF wireless communication links may be established between related devices (e.g., between a cellular telephone and its earpiece/microphone assembly that may be configured to mount on a user's ear or the like). Infrared and other types of short range wireless communication links are, of course, also well known in the art between related electronic devices.

Some such cooperating devices provide security features to guard against unauthorized usage of one or both of the cooperating wirelessly-connected devices. For example, a smart card reader may include cryptographic security information (on an inserted smart card) associated with an authorized user. The smart card reader with a cryptographic/security smart card connected therein may be sufficiently small to be carried at all times on the person authorized to use some other associated device (e.g., a portable communication device such as a cell phone, wireless communication device or the like). In such situations, the protected device may be configured to lock up, shut down, or otherwise become disabled if its connection link with the authorizing smart card reader is broken. While this does provide needed security, it can also cause a nuisance (e.g., if a user forgetfully leaves one of the protected devices on a restaurant table, airplane, car, etc. and then walks out of range, the authorizing security communication link is broken). Even if the authorized user later remembers the forgotten device and comes back to get it, once having breached security protocols, re-establishing authorized use may involve additional effort and/or time.

One prior approach towards enabling/disabling an electronic device display based upon separation between a wirelessly linked pc and a remote electronic device is described at US Patent No. 6,594,762. Here, the display of a personal computer is enabled only if an authorized remote user device is within a relatively near distance or proximity to the personal computer. However, this simply illustrates the problem described above where a user may forgetfully break the wireless communication link without intending to do so -- and then suffer adverse consequences. It offers no user warning alarm if the link is broken or endangered.

GB 2 394 585 discloses an apparatus for alerting a user to removal of an item such as an umbrella or mobile telephone or to the disappearance of a small child or a pet. The apparatus comprises a transmitter, a receiver and an alarm arranged as a primary unit, preferably forming part of a watch cooperating with a secondary unit attached to the item being monitored.

### BRIEF SUMMARY

The invention is defined in the independent claims. Some optional features of the invention are defined in the dependent claims.

We now provide a user alarm if a wireless connection between related devices is lost or endangered.

For example, if one is using a smart card reader with a portable wireless communication device for access control, if the smart card reader and the wireless communication device are separated beyond usable wireless link range, then the wireless communication device will lock up. However, as a user, it would be a great improvement to know about this when it happens so that the situation can be rectified (or perhaps even prevented if a warning signal is given in advance of actual link loss).

For example, if one forgetfully leaves the smart card reader in a restaurant, a user alarm can provide immediate notification that the smart card reader was forgotten while it is still convenient and timely to go back and retrieve it from the restaurant. This is considerably better than perhaps discovering an hour or so later that the wireless communication device is locked when one next goes to use it.

In the exemplary embodiment, a wireless communication device (and quite possibly the smart card reader itself) monitors a Bluetooth (RTM) wireless connection with a smart card reader access control device. If it is determined that the connection has been broken (or is endangered), then the user is notified with an attention-getting alarm. For example, an audible beep or ringtone may be used to audibly alert the user or tactile senses may be used via a vibrator output or other types of alarms such as a visual alarm like a flashing LED or LCD might be used.

Preferably, the type of alarming notification may be selectively controlled by the user who may be given an option (e.g., via an existing user profile application) to specify the desired type of alarm notification. The type of notification could even be automatically changed in response to sensed changes in a current user profile (e.g., if the user selects a vibrator output for incoming message notifications, then a vibrator alarm output could also be automatically chosen).

In addition, if the security device (e.g., smart card reader) is outfitted with sufficient hardware (e.g., an audible speaker, tactile vibrator or flashing light), it could also be programmed to provide an alarm notification to the user such that if the situation is reversed (e.g., the wireless communication device is forgetfully left at the restaurant), then the user could also receive an alarm notification to permit quick and convenient rectification of the situation.

There are a number of wireless link monitoring techniques that may be employed. To enhance security features, if a cryptographically secure "heartbeat" is available on the link, then such a "secure" heartbeat may be monitored and one or a number of missing secure heartbeats would then be interpreted as a broken or endangered link such as to generate a suitable alarm. If a secure heartbeat signal is not present (or if for some reason it is not desired to monitor the secure heartbeat), then typically another non-secure (possibly low level, infrequently occurring) link heartbeat may be monitored to ascertain continued viability of the wireless link. Still further, or alternatively, signal power on the link may be monitored so as to detect when it passes below one or more thresholds indicating that the link is either endangered or no longer useful (i.e., broken).

In exemplary embodiments herein described, the user is given an attention-getting signal (e.g., audible, tactile or visual) that is not likely to be ignored or unnoticed when the two wirelessly-connected devices lose their connection (or the connection is endangered). In one exemplary embodiment, both devices connected by the monitored wireless link are portable. However, it is also possible that our alarming techniques could be utilized to monitor wireless communication links between one or more portable devices and one or more non-portable devices.

The described embodiments may be realized in hardware, software or a combination of hardware and software and provide a method for monitoring a wireless connection between plural devices and generating a user alarm if the wireless connection is lost or endangered. The exemplary embodiments are realized, at least in part, by executable computer program code which may be embodied in physical digital memory media.

### BRIEF DESCRIPTION OF THE DRAWINGS

These and other objects and advantages of this invention will be more completely understood and appreciated by careful study of the following more detailed description of at least one exemplary embodiment in conjunction with the accompanying drawings, in which:
FIG. **1** is an overall system wide schematic view of an exemplary wireless email communication system incorporating a mobile wireless communication device providing a user alarm if a wireless connection to an associated smart card reader is lost or endangered;
FIG. **2** is an abbreviated schematic diagram of hardware typically included within an exemplary mobile wireless communication device of the type shown in FIG. **1****;**
FIGS. **3A** and **3B** provide an exemplary abbreviated schematic flow diagram of computer software (i.e., program logic) that may be utilized in the mobile wireless communication device(s) of FIG. **1** to monitor a wireless connection and to provide a user alarm; and
FIGS. **4A** and **4B** provide an exemplary abbreviated schematic flow diagram of computer software (i.e., program logic) that may be utilized in the mobile wireless communication device(s) of FIG. **1** to enable a user to set personal profile preferences for the type of connection monitor and/or user alarm.

### DETAILED DESCRIPTION OF EXEMPLARY EMBODIMENTS

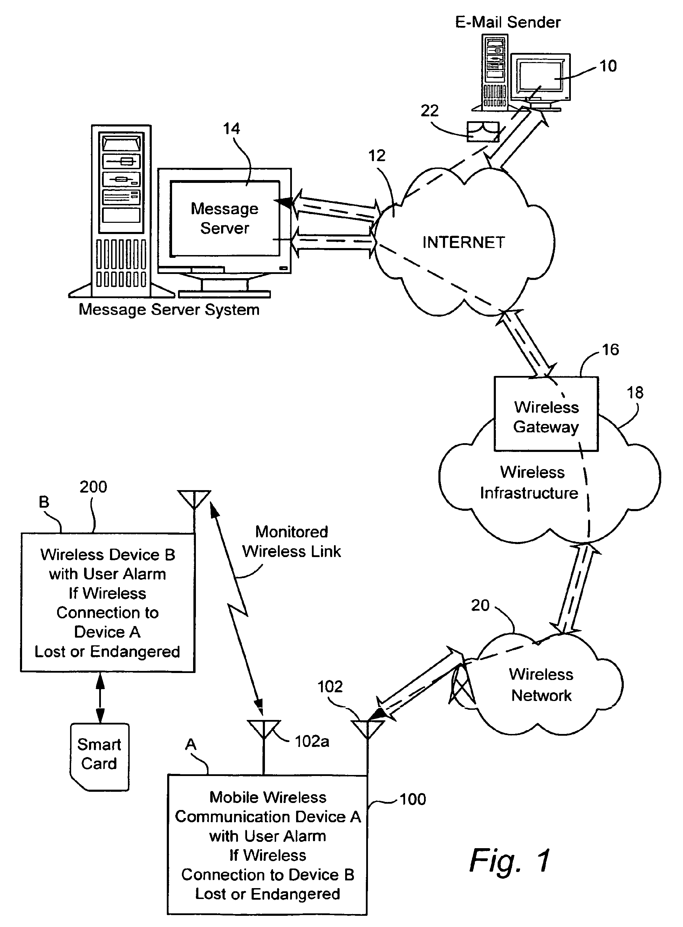

FIG. **1** is an overview of an exemplary communication system in which a wireless communication device **100** may be used. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG **1** may instead be connected to a wide area network (WAN) other than the Internet, although email transfers are commonly accomplished through Internet-connected arrangements as shown in FIG. **1****.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. **1****,** as they do not directly play a role in the invention described below. Message servers such as server **14** typically extend beyond just email sending and receiving; they also include dynamic database storage engines that have predefined database formats for data like calendars, to-do lists, task lists, email and documentation.

The Wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1****,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received. Messages will typically be encrypted from sender to receiver by utilizing a key that is unique to a given device. Examples of two commonly used methods are the Data Encryption Standard (Triple - DES) and the Advanced Encryption Standard (AES).

Regardless of the specific mechanism controlling forwarding of messages to mobile device **100 ,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

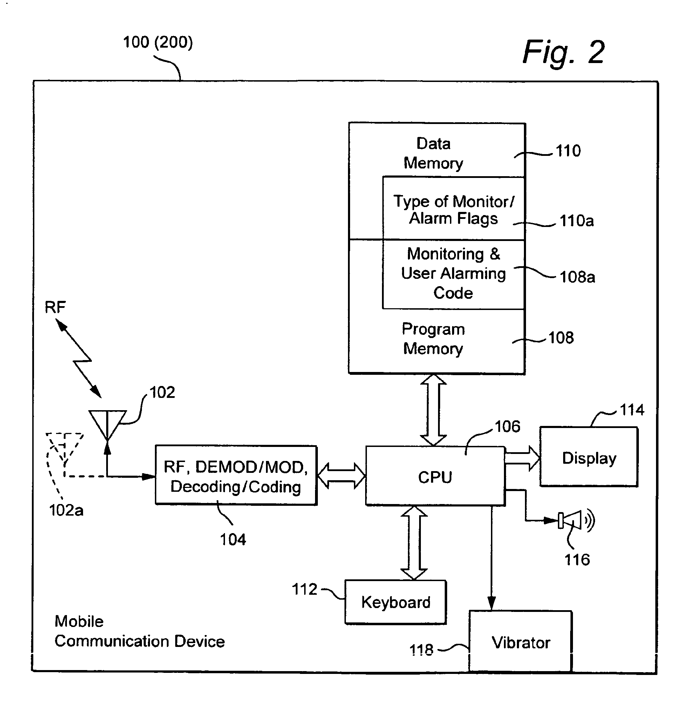

As depicted in FIG. **2****,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110**). CPU **106** also communicates with a conventional keyboard **112,** display **114** (e.g., an LCD) an audio transducer or speaker **116** and a vibrator transducer **118.** A portion of data memory **110a** is available for storing flags indicating the type of link monitoring and/or user alarms to be used. Suitable computer program executable code is stored in portions of program memory **108a** to constitute the program logic for effecting link monitoring and the issuing of a suitable user alarm if the monitored link is endangered or lost.

As indicated in parenthesis at FIG. **2****,** the mobile communication device depicted may also generally describe the smart card reader **200** (wireless device B shown in FIG. **1** and wirelessly linked to the mobile communication device **100).** Of course, the wireless device **200** would also include a smart card connection interface port to CPU **106.** Due to the relatively smaller size of a typical smart card reader **200,** the user interface may comprise only a single button, one or more LED lights and/or a relatively small status display. Preferably, in the exemplary embodiment, the smart card reader **200** will also include a speaker **116** and/or vibrator **118** if the smart card reader **200** is to be provided with a user alarm feature (e.g., a flashing LED). As will be recognized, the user alarm herein described may be provided in either wireless device **100** or wireless device **200** or in both as may be desired for a particular application.

As depicted in dotted lines at FIG. **2****,** a separate antenna **102a** may be provided for the monitored wireless link (the main antenna **102** being utilized perhaps at different frequency bands and/or modes of RF communication to provide the main functional wireless communication link to network **20** as depicted in FIG. **1**). As those in the art will appreciate, the usual Bluetooth (RTM) link (if that happens to be employed for the monitored wireless link) may utilize an antenna and RF processing circuits that are in common usage for other purposes. Alternatively, antenna/RF processing circuits dedicated to the Bluetooth (RTM) (or other monitored wireless link) may be additionally provided as will be apparent to those in the art.

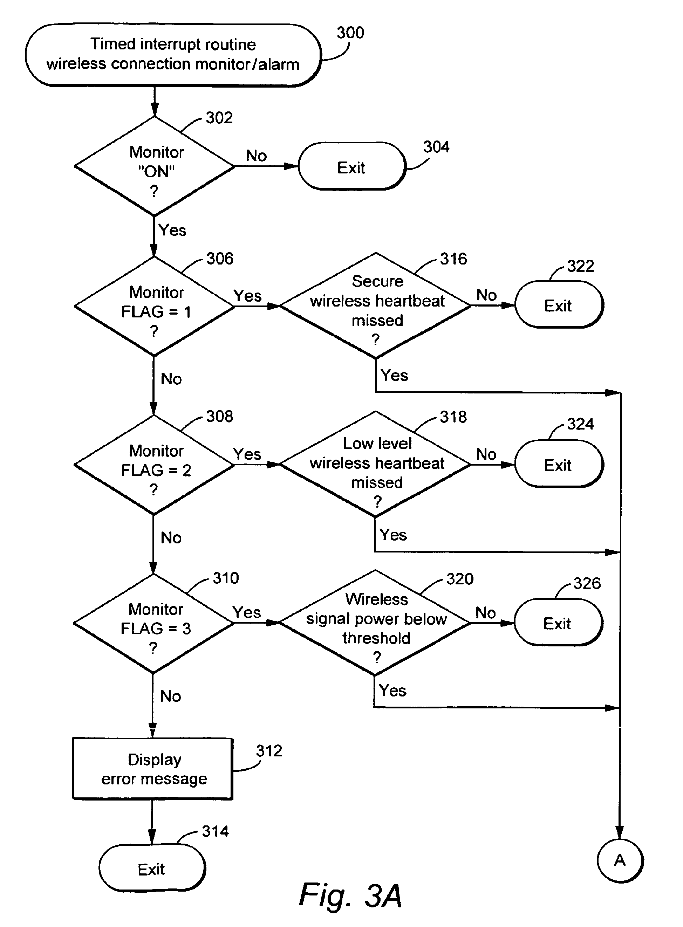

A timed interrupt routine for monitoring the wireless connection and generating an alarm if appropriate is depicted at FIGS. **3A-3B****.** The timed interrupt routine **300** may be entered relatively infrequently thus minimizing extra processing load on the CPU **106.** For example, some typical "heartbeat" signals of an operating wireless link may only occur relatively infrequently (perhaps only once every 30 seconds or so). This may be especially true for "secure" heartbeats which require cryptographic processing. Accordingly, the monitoring function need not be performed any more frequently than the expected occurrences of the monitored link characteristic.

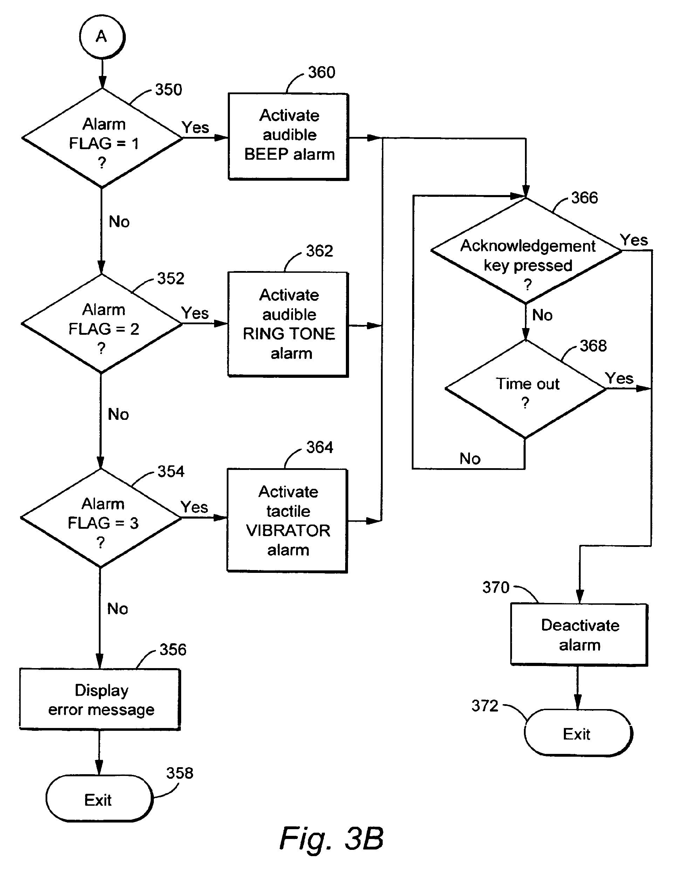

After entry to the timed interrupt routine at **300,** a test is made at **302** to see if the monitoring function is currently "ON". If not, then exit is taken at **304.** However, if the monitoring function is "ON", then tests are made successively at **306, 308** and **310** to determine the value of the monitor flag (indicating the type of monitoring to be conducted). If the monitoring flag does not have an expected value, then an error message is displayed at **312** and the routine is exited at **314.** However, if the monitoring flag has an expected value, then the link characteristic associated with the flag value is tested for at **316, 318** and **320** respectively. If no problem is found, then the routine is merely exited at **322, 324** and **326** respectively. However, if a problem is discovered, then the routine passes control to a series of alarm flag tests at **350, 352** and **354** (shown in FIG. **3B**). If no expected alarm flag value is detected, then an error message is displayed at **356** and exit is taken at **358.** However, if an expected alarm flag value is detected, then a branch is taken to the appropriate alarm activation module **360, 362** and **364** so as to activate either an audible beep alarm (if the flag value is 1) or audible ringtone alarm (if the flag value is 2) or a tactile vibrator alarm (if the alarm value is 3). If a visible flashing light type of alarm is implemented, then a corresponding flag value (e.g., 4) for that would also be checked and, if appropriate, the alarm light would be activated. Once the alarm has been activated, then control is passed to a timing loop **336, 368** waiting for an acknowledgement key to be pressed at **366** or for a time-nut condition at **368** before the alarm is deactivated at **370** and exit is taken at **372.**

As explained above, an exemplary timed interrupt routine for monitoring the wireless connection and generating an alarm if appropriate is schematically depicted in abbreviated form at FIGS. **3A-3B****.** This exemplary timed interrupt may include any desired number of different types of checks on the monitored connection. The exemplary monitored secure wireless heartbeat may typically be at the application layer of the wireless communication device (e.g., implemented as a timer). The operating system may be programmed to notify the application every N minutes to send a ping to the associated smart card reader. If the application does not receive a recognizable reply to such ping within a specified period of time, the connection may be assumed lost (or endangered) and may be closed. Similarly, the smart card reader may be programmed to close the connection from its end if it does not receive recognizable communication from the wireless communication device after N minutes. A monitored low level wireless heart beat may similarly involve a periodic non-secure low level ping communication. A monitored wireless signal power vis-A-vis a specified level may similarly involve detection (on either end) of an out of range (or endangered) situation (e.g., where successful communication takes excessive time because the RF signal is relatively weak and thus introduces numerous detected communication errors necessitating excessive retries to communicate a given packet of digital data). When the number of retries required becomes excessive (i.e., beyond a specified limit), the connection may be considered endangered or broken (and then possibly dropped).

Since those in the art should already be acquainted with the existence of a secure wireless heartbeat or other low level wireless heartbeats and/or with a monitoring of wireless signal power passing below some threshold, it is not believed necessary to further describe the details of such monitoring. Instead, the final testing for the absence of some expected characteristic feature of the monitored wireless link is simply depicted in abbreviated schematic form at **316, 318** and **320** respectively.

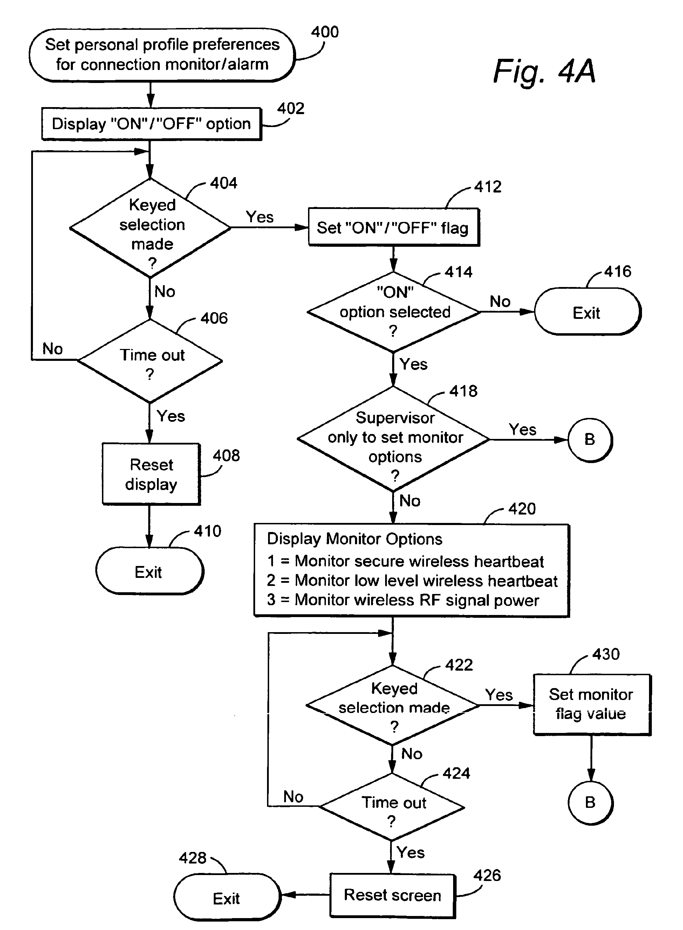

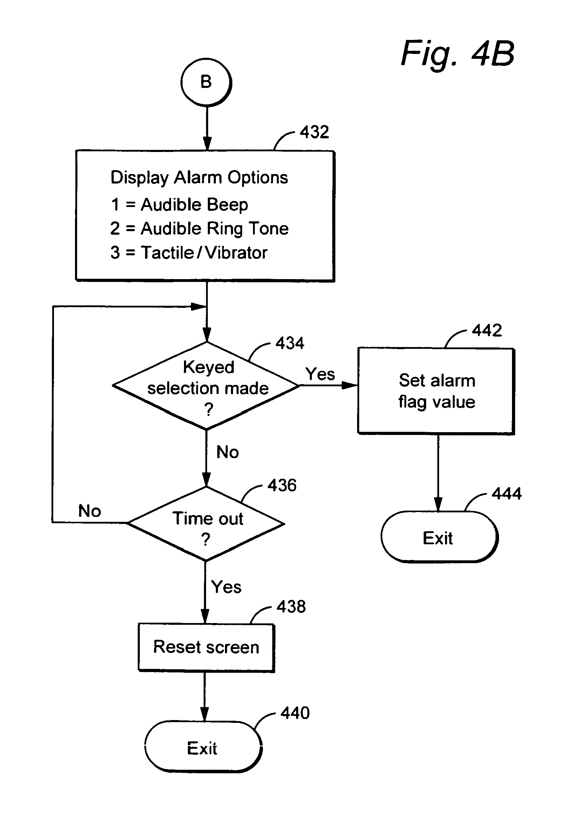

One possible program logic for setting personal profile preferences for such monitoring and/or alarming features (i.e., the flag values discussed in connection with FIGS. **3A** and **3B**) is depicted at FIGS. **4A** and **4B****.** Here, if the routine is entered at **400,** then an "ON"/"OFF" option is displayed at **402** and a key selection/time-out loop is entered at **404, 406** for the user to make a selection. If no selection is made within the allotted time, then the display is reset at **408** and exit is taken at **410.** However, if the user makes a keyed selection, then the "ON"/"OFF" flag is set appropriately at **412.** If the "ON" option has not been selected, as tested at **414,** then exit is taken at **416.** If the "ON" option has been selected, then a test is made at **418** to see if the system has been configured (e.g., via a downloaded IT Policy set at the enterprise administrative level) such that only a supervisor is permitted to set the options for monitoring the wireless link. If so, then control is transferred to the display and setting of alarm options by the user as depicted in FIG. 4B. However, if the user is permitted to set monitoring options, then those monitoring options are displayed at **420** (flag value 1 for monitoring secure wireless heartbeat, flag value 2 for monitoring non-secure wireless heartbeat and flag value 3 for monitoring wireless RF signal power). A key selection/time-out loop is then entered at **422, 424.** If no selection is made by the user within the available time, then the screen is reset at **426** and exit is taken at **428.** However, if the user has timely made a selection among the displayed options, then the monitor flag value is appropriately set at **430** before control is passed to the alarm option module of FIG. **4B****.**

In FIG. **4B****,** the alarm options for the user to select are displayed at **432** (flag value 1 equals audible beep, flag value 2 equals an audible ringtone, and flag value 3 equals a tactile/vibrator alarm). A user key selection/time-out loop is then entered at **434, 436.** If the user fails to make an appropriate selection within the allotted time, then the screen is reset at **438** and exit is taken at **440.** However, if the user makes an appropriate selection within the allotted time, then the alarm flag is appropriately set at **442** before the routine is exited at **444.** As will be appreciated, another option (e.g., flag value 4) for selecting a visual flashing light type of alarm may also be provided.

While the above has been described in connection with presently preferred exemplary embodiments, those skilled in the art will recognize that various changes and modifications may be made to the exemplary embodiments while yet retaining many of their novel features and advantages. Accordingly, all such variations and modifications are intended to be included within the scope of the appended claims.

## Claims

1. A portable wireless user communication device adapted for being wirelessly coupled to a second device via a wireless link that has a detectable characteristic while the wireless link is operatively established, said portable wireless user communication device comprising:
a main control CPU (106) configured to:
sense a change in a user profile of a user profile application of the wireless communications device, wherein said user profile specifies a notification type;
select an alarm type based on said notification type;
monitor said wireless link; and
detect said detectable characteristic; and
an alarm generating component (116, 118) configured to generate a user alarm, said user alarm being of said alarm type, which is adapted to signal a user of said communication device in response to an output of said main control CPU (106), said output representing impairment of the wireless link.

2. A portable wireless user communication device as in claim 1 wherein said alarm generating component (116, 118) is further configured to select said alarm type from among a group of user alarm types including: (a) audible beep, (b) audible ringtone, (c) vibrator and (d) visual flashing light.

3. A portable wireless user communication device as in claim 1 wherein the detectable characteristic is selectable from a group including:
(a) a secure heartbeat signal received on said wireless link;
(b) a non-secure heartbeat signal received on said wireless link; and
(c) a signal power level of said wireless link.

4. A method for operating a portable wireless user communication device adapted for being wirelessly coupled to a second device via a wireless link that has a detectable characteristic while the wireless link is operatively established, said method comprising:
sensing a change in a user profile of a user profile application of the wireless communications device, wherein said user profile specifies a notification type;
monitoring said wireless link;
detecting said detectable characteristic;
selecting an alarm type based on said notification type; and
issuing a user alarm, said user alarm being of said alarm type, said user alarm signaling a user of said communication device in response to said detecting representing impairment of the wireless link.

5. A method as in claim 4 wherein said selecting said alarm type comprises selecting from among a group of types including: (a) audible beep, (b) audible ringtone, (c) vibrator and (d) visual flashing light.

6. A method as in claim 5 wherein the detectable characteristic is selectable from a group including:
(a) a secure heartbeat signal received on said wireless link;
(b) a non-secure heartbeat signal received on said wireless link; and
(c) a signal power level of said wireless link.

7. A digital computer program storage medium storing a computer program for controlling, when executed, operation of a portable wireless user communication device adapted for being wirelessly coupled to a second device via a wireless link that has a detectable characteristic while the wireless link is operatively established, said program comprising means adapted to perform the steps of:
sensing a change in a user profile of a user profile application of the wireless communications device, wherein said user profile specifies a notification type;
monitoring said wireless link;
detecting said characteristic;
selecting an alarm type based on said notification type; and
issuing a user alarm, said user alarm being of said alarm type, said user alarm signaling a user of said communication device in response to said detecting representing impairment of the wireless link.

8. A computer program storage medium as in claim 7 wherein said selecting said alarm type comprises selecting from among a group of types including: (a) audible beep, (b) audible ringtone, (c) vibrator and (d) visual flashing light.

9. A computer program storage medium as in claim 7 wherein the detectable characteristic is selectable from a group including:
(a) a secure heartbeat signal received on said wireless link;
(b) a non-secure heartbeat signal received on said wireless link; and
(c) a signal power level of said wireless link.

## Patentansprüche

1. Tragbare drahtlose Benutzerkommunikationsvorrichtung, die ausgebildet ist, mit einer zweiten Vorrichtung drahtlos verbunden zu werden über eine drahtlose Verbindung, die eine erfassbare Charakteristik hat, während die drahtlose Verbindung betriebsbereit hergestellt wird, wobei die tragbare drahtlose Benutzerkommunikationsvorrichtung aufweist:
eine Hauptsteuerungs-CPU (106), die konfiguriert ist:
eine Änderung in einem Benutzerprofil einer Benutzerprofilanwendung der drahtlosen Kommunikationsvorrichtung zu erfassen, wobei das Benutzerprofil einen Benachrichtigungstyp spezifiziert;
einen Alarmtyp basierend auf dem Benachrichtigungstyp zu wählen;
die drahtlose Verbindung zu überwachen; und
die erfassbare Charakteristik zu erfassen; und
eine Alarmerzeugungskomponente (116, 118), die konfiguriert ist, einen Benutzeralarm zu erzeugen, wobei der Benutzeralarm ein Alarmtyp ist, der ausgebildet ist, einem Benutzer der Kommunikationsvorrichtung als Reaktion auf eine Ausgabe der Hauptsteuerungs-CPU (106) zu signalisieren, wobei die Ausgabe eine Beeinträchtigung der drahtlosen Verbindung repräsentiert.

2. Tragbare drahtlose Benutzerkommunikationsvorrichtung gemäß Anspruch 1, wobei die Alarmerzeugungskomponente (116, 118) weiter konfiguriert ist, den Alarmtyp aus einer Gruppe von Benutzeralarmtypen zu wählen, die umfasst: (a) hörbarer Piepton, (b) hörbarer Klingelton, (c) Vibrator und (d) visuelles Blinklicht.

3. Tragbare drahtlose Benutzerkommunikationsvorrichtung gemäß Anspruch 1, wobei die erfassbare Charakteristik aus einer Gruppe auswählbar ist, die umfasst:
(a) ein sicheres Herzschlagsignal, das auf der drahtlosen Verbindung empfangen wird;
(b) ein nicht-sicheres Herzschlagsignal, das auf der drahtlosen Verbindung empfangen wird; und
(c) ein Signalleistungspegel der drahtlosen Verbindung.

4. Verfahren zum Betreiben einer tragbaren drahtlosen Benutzerkommunikationsvorrichtung, die ausgebildet ist, mit einer zweiten Vorrichtung drahtlos verbunden zu werden über eine drahtlose Verbindung, die eine erfassbare Charakteristik hat, während die drahtlose Verbindung betriebsbereit hergestellt wird, wobei das Verfahren aufweist:
Erfassen einer Änderung in einem Benutzerprofil einer Benutzerprofilanwendung der drahtlosen Kommunikationsvorrichtung, wobei das Benutzerprofil einen Benachrichtigungstyp spezifiziert;
Überwachen der drahtlosen Verbindung;
Erfassen der erfassbaren Charakteristik;
Wählen eines Alarmtyps basierend auf dem Benachrichtigungstyp; und
Ausgeben eines Benutzeralarms, wobei der Benutzeralarm von dem Alarmtyp ist, wobei der Benutzeralarm einem Benutzer der Kommunikationsvorrichtung als Reaktion auf das Erfassen signalisiert und eine Beeinträchtigung der drahtlosen Verbindung repräsentiert.

5. Verfahren gemäß Anspruch 4, wobei das Wählen des Alarmtyps ein Wählen aus einer Gruppe von Typen aufweist, die umfasst: (a) hörbarer Piepton, (b) hörbarer Klingelton, (c) Vibrator und (d) visuelles Blinklicht.

6. Verfahren gemäß Anspruch 5, wobei die erfassbare Charakteristik aus einer Gruppe auswählbar ist, die umfasst:
(a) ein sicheres Herzschlagsignal, das auf der drahtlosen Verbindung empfangen wird;
(b) ein nicht-sicheres Herzschlagsignal, das auf der drahtlosen Verbindung empfangen wird; und
(c) ein Signalleistungspegel der drahtlosen Verbindung.

7. Digitales Computerprogrammspeichermedium, das ein Computerprogramm speichert zur Steuerung, bei Ausführung, einer Operation einer tragbaren drahtlosen Benutzerkommunikationsvorrichtung, die ausgebildet ist, mit einer zweiten Vorrichtung drahtlos verbunden zu werden über eine drahtlose Verbindung, die eine erfassbare Charakteristik hat, während die drahtlose Verbindung betriebsbereit hergestellt wird, wobei das Programm Mittel aufweist, die ausgebildet sind, die Schritte durchzuführen:
Erfassen einer Änderung in einem Benutzerprofil einer Benutzerprofilanwendung der drahtlosen Kommunikationsvorrichtung, wobei das Benutzerprofil einen Benachrichtigungstyp spezifiziert;
Überwachen der drahtlosen Verbindung;
Erfassen der Charakteristik;
Wählen-eines Alarmtyps basierend auf dem Benachrichtigungstyp; und
Ausgeben eines Benutzeralarms, wobei der Benutzeralarm von dem Alarmtyp ist, wobei der Benutzeralarm einem Benutzer der Kommunikationsvorrichtung als Reaktion auf das Erfassen signalisiert und eine Beeinträchtigung der drahtlosen Verbindung repräsentiert.

8. Computerprogrammspeichermittel gemäß Anspruch 7, wobei das Wählen des Alarmtyps ein Wählen aus einer Gruppe von Typen aufweist, die umfasst: (a) hörbarer Piepton, (b) hörbarer Klingelton, (c) Vibrator und (d) visuelles Blinklicht.

9. Computerprogrammspeichermittel gemäß Anspruch 7, wobei die erfassbare Charakteristik aus einer Gruppe auswählbar ist, die umfasst:
(a) ein sicheres Herzschlagsignal, das auf der drahtlosen Verbindung empfangen wird;
(b) ein nicht-sicheres Herzschlagsignal, das auf der drahtlosen Verbindung empfangen wird; und
(c) ein Signalleistungspegel der drahtlosen Verbindung.

## Revendications

1. Dispositif de communication sans fil portable d'un utilisateur, conçu pour être couplé sans fil à un second dispositif en passant par une liaison sans fil qui a une caractéristique pouvant être détectée tandis que la liaison sans fil est établie fonctionnellement, ledit dispositif de communication sans fil portable d'utilisateur comportant :
une unité centrale de traitement CPU (106) de commande principale configurée pour :
capter un changement d'un profil d'utilisateur d'une application de profil d'utilisateur du dispositif de communications sans fil, ledit profil d'utilisateur spécifiant un type de notification ;
sélectionner un type d'alarme basé sur ledit type de notification ;
surveiller ladite liaison sans fil ; et
détecter ladite caractéristique pouvant être détectée ; et
un composant (116, 118) de génération d'alarme configuré pour générer une alarme d'utilisateur, ladite alarme d'utilisateur étant dudit type d'alarme qui est conçue pour transmettre un signal à un utilisateur dudit dispositif de communication en réponse à un signal de sortie de ladite CPU (106) de commande principale, ledit signal de sortie représentant une dégradation de la liaison sans fil.

2. Dispositif de communication sans fil portable d'utilisateur selon la revendication 1, dans lequel ledit composant (116, 118) de génération d'alarme est en outre configuré pour sélectionner ledit type d'alarme dans un groupe de types d'alarme d'utilisateur comprenant : (a) un bip sonore, (b) une tonalité audible, (c) un vibrateur et (d) une lumière clignotante visuelle.

3. Dispositif de communication sans fil portable d'utilisateur selon la revendication 1, dans lequel la caractéristique pouvant être détectée peut être sélectionnée dans un groupe comprenant :
(a) un signal de battement cardiaque sécurisé reçu sur ladite liaison sans fil ;
(b) un signal de battement cardiaque non sécurisé reçu sur ladite liaison sans fil ; et
(c) un niveau de puissance de signal de ladite liaison sans fil.

4. Procédé pour faire fonctionner un dispositif de communication sans fil portable d'utilisateur conçu pour être couplé sans fil à un second dispositif en passant par une liaison sans fil qui a une caractéristique pouvant être détectée tandis que la liaison sans fil est établie fonctionnellement, ledit procédé comprenant :
le fait de capter un changement d'un profil d'utilisateur d'une application de profil d'utilisateur du dispositif de communications sans fil, ledit profil d'utilisateur spécifiant un type de notification ;
la surveillance de ladite liaison sans fil ;
la détection de ladite caractéristique pouvant être détectée ;
la sélection d'un type d'alarme basé sur ledit type de notification ; et
la délivrance d'une alarme d'utilisateur, ladite alarme d'utilisateur étant dudit type d'alarme, ladite alarme d'utilisateur transmettant un signal à un utilisateur dudit dispositif de communication en réponse à ladite détection représentant une dégradation de la liaison sans fil.

5. Procédé selon la revendication 4, dans lequel ladite sélection dudit type d'alarme comprend la sélection parmi un groupe de types comprenant : (a) un bip sonore, (b) une tonalité audible, (c) un vibrateur et (d) une lumière clignotante visible.

6. Procédé selon la revendication 5, dans lequel la caractéristique pouvant être détectée peut être sélectionnée dans un groupe comprenant :
(a) un signal de battement cardiaque sécurisé reçu sur ladite liaison sans fil ;
(b) un signal de battement cardiaque non sécurisé reçu sur ladite liaison sans fil ; et
(c) un niveau de puissance de signal de ladite liaison sans fil.

7. Support de stockage de programme informatique numérique stockant un programme informatique pour la commande, lorsqu'il est exécuté, du fonctionnement d'un dispositif de communication sans fil portable d'utilisateur conçu pour être couplé sans fil à un second dispositif en passant par une liaison sans fil qui a une caractéristique pouvant être détectée tandis que la liaison sans fil est établie fonctionnellement, ledit programme comprenant des moyens conçus pour exécuter les étapes qui consistent :
à capter un changement d'un profil d'utilisateur d'une application de profil d'utilisateur du dispositif de communication sans fil, ledit profil d'utilisateur spécifiant un type de notification ;
à surveiller ladite liaison sans fil ;
à détecter ladite caractéristique ;
à sélectionner un type d'alarme basé sur ledit type de notification ; et
à délivrer une alarme d'utilisateur, ladite alarme d'utilisateur étant dudit type d'alarme, ladite alarme d'utilisateur transmettant un signal à un utilisateur dudit dispositif de communication en réponse à ladite détection représentant une dégradation de la liaison sans fil.

8. Support de stockage de programme informatique selon la revendication 7, dans lequel ladite sélection dudit type d'alarme comprend une sélection dans un groupe de types comprenant : (a) un bip sonore, (b) une tonalité audible, (c) un vibrateur et (d) une lumière clignotante visible.

9. Support de stockage de programme informatique selon la revendication 7, dans lequel la caractéristique pouvant être détectée peut être sélectionnée dans un groupe comprenant :
(a) un signal de battement cardiaque sécurisé reçu sur ladite liaison sans fil ;
(b) un signal de battement cardiaque non sécurisé reçu sur ladite liaison sans fil ; et
(c) un niveau de puissance de signal de ladite liaison sans fil.
